# FASCICULE DE BREVET EUROPEEN

(11) **EP 3 477 050 B1**
(45) Date de publication et mention de la délivrance du brevet: **02.03.2022**
(21) Numéro de dépôt: 18195628.5
(22) Date de dépôt: 20.09.2018
(51) Int. Cl.: F01D 5/14, F04D 29/32, F04D 29/54, F04D 29/68

(54) **COMPRESSEUR DE TURBOMACHINE AVEC VIROLE DE CONTOUR ASYMÉTRIQUE**
VERDICHTER EINER TURBOMASCHINE MIT ASYMMETRISCH KONTURIERTEM STRÖMUNGSRING
TURBOMACHINE COMPRESSOR WITH ASYMMETRICLY CONTOURED WALL RING

(30) Priorité: 26.10.2017 BE 201705765
(43) Date de publication de la demande: 01.05.2019
(73) Titulaire: Safran Aero Boosters SA, 4041 Herstal (BE)
(72) Inventeur: HIERNAUX, Stéphane, 4680 Oupeye (BE)
(74) Mandataire: Lecomte & Partners

(56) Documents cités:
- EP-A1- 2 597 257
- EP-A1- 2 696 029
- WO-A2-2009/112776
- WO-A2-2014/105270
- DE-A1-102015 224 376

## Description

### Domaine technique

L'invention concerne une géométrie à bosse et à creux dans un passage inter-aubes de compresseur de turbomachine. L'invention a également trait à une turbomachine axiale, notamment un turboréacteur d'avion ou un turbopropulseur d'aéronef.

### Technique antérieure

Le document FR3011888 A1 divulgue un turboréacteur avec une pièce de compresseur comprenant au moins des première et deuxième pales, et une plateforme à partir de laquelle s'étendent les pales. La plateforme présente une surface non-axisymétrique limitée par un premier et un deuxième plan extrémal, et définie par au moins deux courbes de construction de classe Cl représentant chacune la valeur d'un rayon de ladite surface en fonction d'une position entre l'intrados de la première pale et l'extrados de la deuxième pale selon un plan sensiblement parallèle aux plans extrémaux. Cette géométrie particulière non-axisymétrique de la surface de la pièce offre un contrôle de l'écoulement, toutefois il limite le débit, notamment en raison de décollements en coins d'aube. Des phénomènes de pompage peuvent survenir.

Le document WO 2014/105270 A2 décrit un autre compresseur selon l'art antérieur.

### Résumé de l'invention

### Problème technique

L'invention a pour objectif de résoudre au moins un des problèmes posés par l'art antérieur. Plus précisément, l'invention a pour objectif d'optimiser le débit et le taux de compression d'un compresseur. L'invention a également pour objectif de proposer une solution simple, résistante, légère, économique, fiable, facile à produire, commode d'entretien, et d'inspection aisée.

### Solution technique

L'invention a pour objet un compresseur de turbomachine axiale, notamment un compresseur basse-pression de turbomachine axiale, le compresseur comprenant : une veine annulaire ; une première aube avec une surface intrados; une deuxième aube avec une surface extrados en regard de la surface intrados de la première aube ; un passage inter-aubes avec une surface de guidage qui relie la surface intrados à la surface extrados en délimitant radialement la veine annulaire, et qui présente une bosse principale et un creux principal ; remarquable en ce que la surface de guidage comprend une zone axisymétrique ou sensiblement plane qui traverse axialement le passage inter-aubes de manière à séparer, et notamment à relier, le creux principal de la bosse principale. La bosse s'étend circonférentiellement depuis la surface extrados de la deuxième aube, et comprend un sommet contre la surface extrados. Le creux s'étend circonférentiellement depuis la surface intrados de la première aube, et comprend un fond contre la surface intrados. La bosse est convexe et le creux est concave.

Selon des modes avantageux de l'invention, le compresseur peut comprendre une ou plusieurs des caractéristiques suivantes, prises isolément ou selon toutes les combinaisons techniques possibles :
- La zone axisymétrique présente une largeur minimale axialement entre le sommet de la bosse et le fond du creux.
- La bosse et le creux se chevauchent axialement, éventuellement sur toute la longueur du creux.
- La longueur de la bosse est supérieure à la longueur du creux.
- Entre le creux et la bosse, la zone axisymétrique s'étend sur la majorité de la largeur du passage inter-aubes.
- Le creux comporte une profondeur P et la bosse présente une hauteur H, la profondeur P et/ou la hauteur H représentant au moins : 0,50%, ou 2% de la hauteur moyenne des aubes.
- La hauteur maximale de la bosse est supérieure à la profondeur maximale du creux.
- La hauteur maximale de la bosse est supérieure ou égale à 3,00 mm, et/ou la profondeur maximale du creux est supérieure ou égale à 2,00 mm.
- Le volume de la bosse est supérieur ou égal au triple du volume du creux, et/ou l'aire de la bosse est supérieure ou égale au double de l'aire du creux.
- Au cumul, l'aire du creux et l'aire de la bosse représentent au plus un cinquième de la surface de guidage.
- Le passage inter-aubes comprend une moitié aval, et une moitié amont dans laquelle la bosse et le creux sont renfermés.
- La surface de guidage comprend une zone amont s'étendant axialement sur au moins 10% des aubes, et séparant axialement les bords d'attaque du creux et de la bosse.
- La longueur de la bosse est comprise entre : 20% et 80%, ou 30% et 50% ; valeurs comprises ; de la longueur de la deuxième aube.
- La longueur du creux est comprise entre : 20% et 50% ; valeurs comprises ; de la longueur de la première aube.
- La largeur de la bosse et/ou la largeur du creux est/sont comprises entre : 10% et 50% ; valeurs comprises ; de la largeur du passage inter-aubes.
- La surface intrados et la surface extrados comprennent chacune un rayon de raccordement traversant axialement le creux et la bosse respectivement.
- La bosse est plus développée radialement que le creux.
- Le creux et la bosse sont non-axisymétriques, et/ou au moins deux fois plus longs que larges.
- La zone axisymétrique s'étend sur la majorité de l'aire de la surface de guidage, notamment sur la majorité de la moitié amont comprenant le creux et la bosse.
- La surface de guidage comprend une zone aval s'étendant axialement sur ou moins 30% de la première aube ou de la deuxième aube, et séparant le creux et la bosse des bords de fuite.
- La bosse présente un sommet et le creux présente un fond aligné axialement avec le sommet.
- La bosse est disposée dans le passage à l'opposé circonférentiellement du creux.
- La surface de guidage, notamment la bosse et le creux sont en contact du flux du compresseur.
- La surface de guidage présente une moitié aval et une moitié amont dans laquelle sont renfermées la bosse et le creux.
- Chaque aube comprend une corde dont l'angle d'inclinaison par rapport à l'axe de rotation est inférieure ou égale à : 15°, ou 30°, ou 40°.
- La zone axisymétrique s'étend sur au moins : 70%, ou 80%, ou 90% de l'aire de la surface de guidage.
- Le passage comprend un axe amont reliant les bords d'attaque, et un axe aval reliant les bords de fuite, lesdits axes délimitant axialement la surface de guidage.
- La première aube et la deuxième aube sont des aubes consécutives et/ou voisines d'une rangée annulaire d'aubes, et/ou inclinées d'au plus : 10° ou 5° l'une par rapport à l'autre autour de l'axe de rotation du compresseur.
- Axialement au niveau du bord de fuite, la surface intrados et/ou la surface extrados sont parallèle(s) à l'axe de rotation du compresseur.
- La bosse et/ou le creux sont à distance axialement des bords d'attaque et/ou des bords de fuite.
- Chaque aube comprend un rayon de raccordement, la surface de guidage s'étendant depuis les rayons de raccordement de la première aube et de la deuxième aube.
- La bosse est convexe, selon au moins deux directions, et/ou forme un épaississement sur le support.
- Le creux est concave, selon au moins deux directions, et/ou forme un amincissement sur son support.
- Chaque aube comprend une corde et un espace entre sa surface intrados et ladite corde, le fond du creux étant à l'intérieur dudit espace, et/ou le creux étant majoritairement à l'intérieur dudit espace.
- Perpendiculairement à la corde, l'envergure du creux et/ou de la bosse est inférieure ou égale à l'envergure de l'aube.

L'invention a également pour objet une aube de compresseur de turbomachine, l'aube comprenant une plateforme de fixation qui comporte une surface de guidage d'un flux de compresseur, et deux bords latéraux destinés à épouser des bords latéraux d'aubes identiques d'une rangée annulaire d'aubes, et une pale s'étendant radialement depuis la surface de guidage, la pale comprenant une surface intrados délimitant un premier passage inter-aubes et une surface extrados délimitant un deuxième passage inter-aubes, la surface de guidage comprenant un creux principal côté intrados, et une bosse principale côté extrados, remarquable en ce que la surface de guidage comprend une première zone axisymétrique ou sensiblement plane qui traverse axialement le premier passage inter-aubes de manière à séparer le creux principal d'un des deux bords latéraux, et une deuxième zone axisymétrique ou plane qui traverse axialement le deuxième passage inter-aubes de manière à séparer la bosse principale de l'autre des deux bords latéraux.

L'invention a également pour objet une turbomachine, notamment un turboréacteur d'aéronef, comprenant un compresseur et/ou au moins une aube, remarquable en ce que le compresseur est conforme à l'invention et/ou l'aube est conforme à l'invention.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description.

### Avantages apportés

La compression dans le passage augmente, tout comme le débit le traversant. Dans les conditions de fonctionnement d'un compresseur, la protubérance et les bosses traitent les phénomènes de tourbillons et de décollements. Le flux empruntant le passage regagne l'extrados au cours de sa compression, ce qui limite le décollement en coin.

### Brève description des dessins

La figure 1 représente une turbomachine axiale selon l'invention.
La figure 2 est un schéma d'un compresseur de turbomachine selon l'invention.
La figure 3 illustre deux aubes de compresseur bordant une surface de guidage selon l'invention.
La figure 4 est une coupe de la figure 3 selon l'axe IV-IV.
La figure 5 est une coupe de la figure 3 selon l'axe V-V.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine, les longueurs étant mesurées axialement. Les largeurs sont mesurées selon la circonférence. La direction radiale est perpendiculaire à l'axe de rotation. L'amont et l'aval sont en référence au sens d'écoulement principal du flux dans la turbomachine.

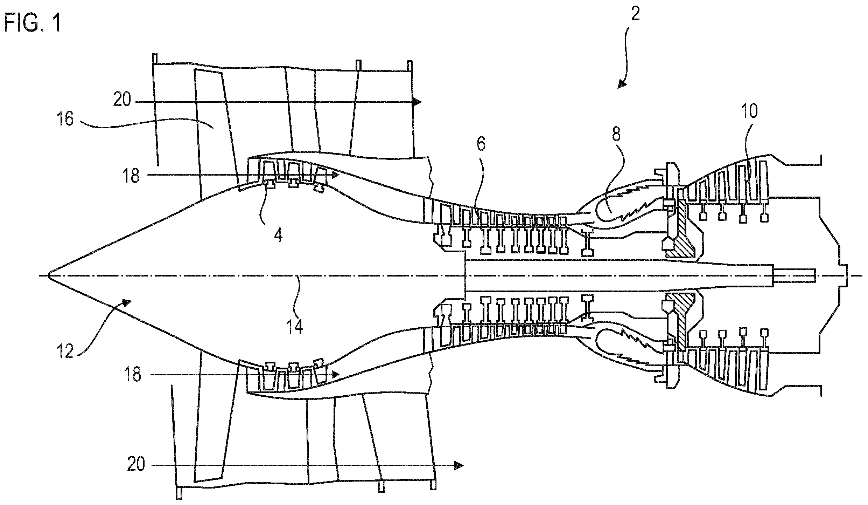

La figure 1 représente de manière simplifiée une turbomachine axiale. Il s'agit dans ce cas précis d'un turboréacteur double-flux. Le turboréacteur 2 comprend un compresseur basse-pression 4, un compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Une soufflante 16, est couplée au rotor 12 et génère un flux d'air qui se divise en un flux primaire 18 et en un flux secondaire 20 traversant un conduit annulaire (partiellement représenté). Le flux secondaire est accéléré pour générer une réaction de poussée utile au vol d'un avion. Les flux primaire 18 et secondaire 20 sont annulaires.

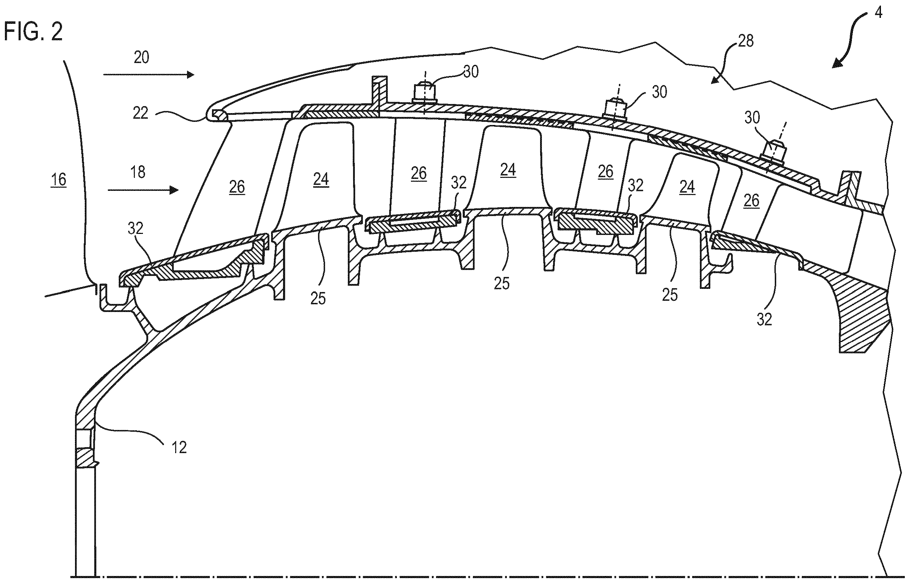

La figure 2 est une vue en coupe d'un compresseur d'une turbomachine axiale telle que celle de la figure 1. Le compresseur peut être le compresseur basse-pression 4. On peut y observer une partie de la soufflante 16 et le bec de séparation 22 du flux primaire 18 et du flux secondaire 20.

Le rotor 12 comprend plusieurs rangées d'aubes rotoriques 24, en l'occurrence trois. Les aubes rotoriques 24 peuvent s'étendre radialement depuis une plateforme à queue d'aronde, ou depuis une couronne interne 25 de tambour monobloc aubagé.

Le compresseur 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression, notamment en pression statique.

Les aubes statoriques 26 s'étendent essentiellement radialement depuis un carter extérieur 28. Elles peuvent y être fixées et immobilisées à l'aide d'axes de fixation 30. Elles traversent radialement le flux primaire 18. Les aubes statoriques peuvent être à corde fixe par rapport au carter 28. Avantageusement, les aubes d'une même rangée sont identiques et alignées. Chaque rangée peut comprendre au moins cent aubes (26 ; 24).

Des viroles internes 32 peuvent être suspendues aux extrémités internes des aubes statoriques 26. Les viroles internes 32 peuvent coopérer de manière étanche avec le rotor 12.

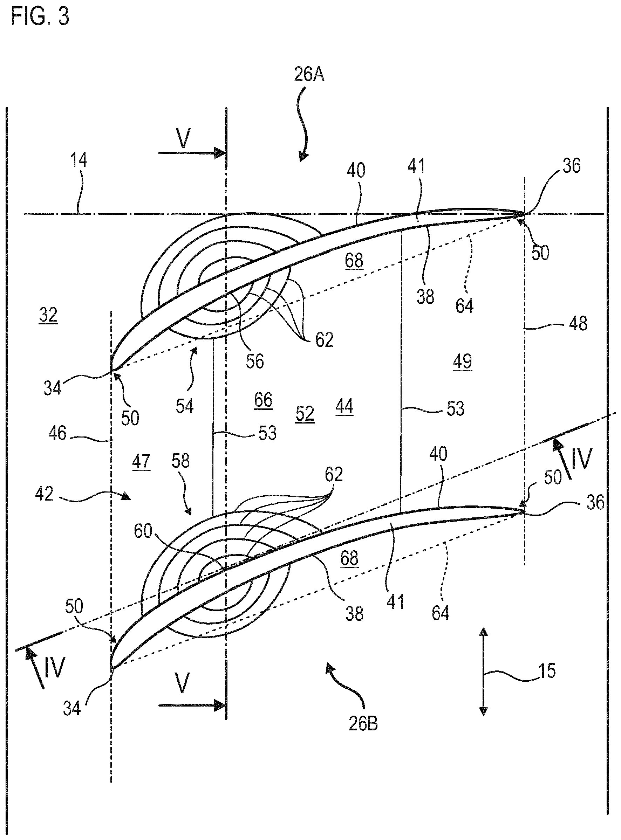

La figure 3 esquisse deux aubes (26A ; 26B) représentatives d'une rangée annulaire. La rangée peut être l'une des rangées présentées en relation avec les figures précédentes. Les aubes (26A ; 26B) et leur support, éventuellement la virole interne 32, sont représentés en plan. L'axe de rotation 14 est tracé à une position figurative pour fournir un repère spatial.

Chaque aube (26A ; 26B) comprend un bord d'attaque 34, un bord de fuite 36, ainsi qu'une surface intrados 38 et une surface extrados 40. Ces surfaces (38 ; 40) peuvent être incurvées et bombées respectivement. Chacune de ces surfaces s'étend du bord d'attaque 34 au bord de fuite 36 correspondant. Chaque aube peut comporter un empilement de profils aérodynamiques 41 cambrés, dont les côtés génèrent la surface intrados 38 et la surface extrados 40. Au niveau des bords de fuite 36, les contours des profils 41, en intrados et/ou en extrados, sont parallèles et/ou tangents à l'axe de rotation 14 du compresseur.

Les aubes (26A ; 26B) consécutives de la rangée annulaire définissent entre elle un passage 42, également appelé passage inter-aubes 42. Ce passage 42 est cloisonné circonférentiellement par les aubes (26A ; 26B), et délimités par les surfaces intrados et extrados. Le passage 42 peut présenter une surface de guidage 44 entre les deux aubes (26A ; 26B) consécutives, et peut relier la surface intrados 38 qui est en regard de la surface extrados 40 au travers du passage 42.

La surface de guidage 44 peut être délimitée axialement par un axe amont 46 et un axe aval 48 qui relient les bords d'attaque 34 et les bords de fuite 36 respectivement. Ces axes (46 ; 48) peuvent être parallèles, et peuvent généralement définir un parallélogramme ou un trapèze. La surface de guidage 44 peut être généralement plane.

Plus précisément, la surface de guidage 44 peut être une partie de surface tubulaire ou une partie de surface de cône, notamment en raison du rayon de la virole et de l'optionnelle variation de diamètre de la virole 32 le long de l'axe de rotation 14. Elle peut comprendre quatre coins 50 correspondant aux intersections entre les bords (34 ; 36) et le support, en l'occurrence la virole 32, par exemple interne.

La surface de guidage 44 présente une zone axisymétrique 52, éventuellement sensiblement ou plane, qui traverse axialement le passage 42. La zone axisymétrique 52 peut être formée d'arcs 53 de rayons constants autour de l'axe de rotation 14, soit suivant la circonférence. Certains des arcs 53 s'étendent circonférentiellement de la surface intrados 38 à la surface extrados 40. La surface de guidage 44 peut être majoritairement formée de ces arcs 53. La surface de guidage 44 comprend également un creux principal 54 avec un fond 56 formant radialement son extremum, et une bosse principale 58 avec un sommet 60 formant radialement son extremum. Le creux principal 54 et la bosse principale 58 sont « principaux » dans la mesure où ils forment respectivement le creux et la bosse de volume, et/ou d'aire, et/ou de hauteur, principaux de la surface de guidage 44.

Le creux 54 et la bosse 58 peuvent être au même niveau axialement ; ils peuvent se longer axialement. Le fond 56 et le sommet 60 peuvent coïncider axialement. Certains arcs 53 peuvent s'étendre du creux 54 à la bosse 58. Ainsi, la zone axisymétrique 52 sépare circonférentiellement le creux 54 de la bosse 58, tout en traversant le passage 42. La zone axisymétrique 52 peut comprendre un rétrécissement circonférentiel 66 entre le creux 54 et la bosse 58. Ce rétrécissement 66 peut former le tronçon axial le moins large de la zone axisymétrique 52.

Le creux 54 et la bosse 58 sont représentés à l'aide de lignes de niveau 62. Ces lignes de niveau 62 marquent des variations de niveau radial par rapport à une surface de référence, en l'occurrence la surface de guidage 42, et en particulier par rapport à la zone axisymétrique 52.

Le creux 54 et la bosse 58 peuvent s'étendre sur au plus la majorité axiale des aubes (26A ; 26B). La bosse 58 peut être plus longue que le creux 54. Elle peut s'étendre axialement sur 35%, +/-5%, de la corde 64 de la deuxième aube 26B. Le creux 54 peut s'étendre axialement sur 25%, +/-5%, de la corde 64 de la première aube 26A.

La zone axisymétrique 52 peut comprendre un tronçon amont 47 s'étendant vers l'aval depuis l'axe amont 46, et un tronçon aval 49 s'étendant vers l'amont depuis l'axe aval 48. Le creux 54 et la bosse 58 peuvent être distants des bords d'attaque 34, notamment de 10% la longueur axiale d'une corde 64. Ils en sont séparés par le tronçon amont 47 pouvant former un parallélogramme.

Selon la circonférence 15, le creux 54 peut s'étendre sur 15% du passage inter-aubes 42 et s'étendre depuis la surface intrados 38. Son fond 60 peut être contre la surface intrados 38. La bosse 58 peut s'étendre circonférentiellement sur 20% du passage 42, son sommet 60 peut être accolé à la surface extrados 40 de la deuxième aube 26B.

Chaque aube (26A ; 26B) comprend une corde 64 et un espace 68 entre sa surface intrados 38 et sa corde 64. Chaque fond 56 de creux 54 peut être l'intérieur dudit espace 68. Eventuellement, chaque creux 54 est majoritairement, ou totalement, à l'intérieur de l'espace 68 correspondant. Optionnellement, entre 40% et 80% de chaque creux 54 est à l'intérieur de l'espace 68 correspondant.

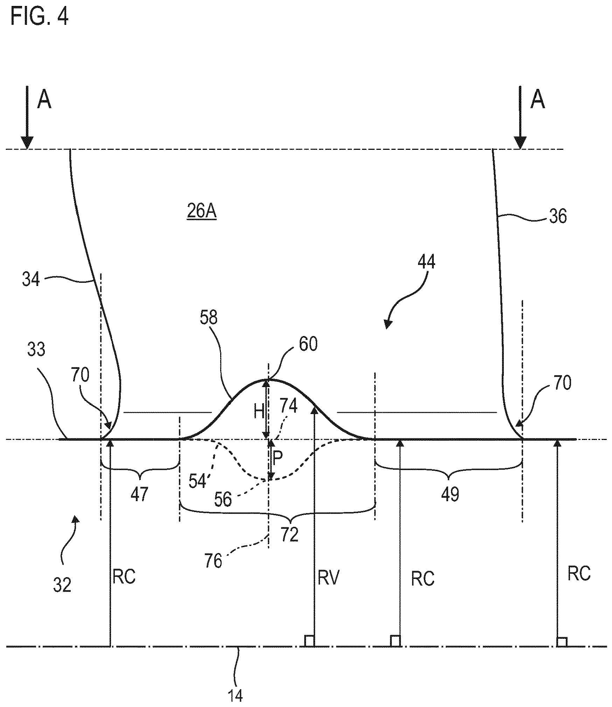

La figure 4 est une coupe de la figure 3 selon l'axe IV-IV. L'inclinaison de l'axe de rotation 14 par rapport au support est figurative et peut varier en pratique. De manière générale, les aubes peuvent comprendre des rayons de raccordement 70 à leurs extrémités radiales. Chaque rayon de raccordement 70 peut entourer son aube respective. La surface de guidage 44 peut s'étendre depuis les rayons de raccordement 70 de manière à les relier deux à deux. L'épaisseur radiale des rayons de raccordement 70 est inférieure à la hauteur H de la bosse 58 et à la profondeur P du creux 54.

Le bord d'attaque 34 et le bord de fuite 36 de la première aube 26A s'étendant radialement depuis la surface annulaire 33 de la virole interne 32. Cette surface annulaire 33 peut présenter un rayon constant RC en dehors de la zone non-axisymétrique 72 recevant la bosse et le creux; là où le rayon variable RV évolue selon la position angulaire autour de l'axe de rotation 14. La surface annulaire 33 peut présenter une symétrie axiale. Les zones 47 et 49 peuvent prolonger la surface annulaire 33 et y être tangentes axialement. Elles peuvent présenter des arcs de rayons constants RC selon la circonférence.

Un trait mixte 74 prolonge les zones 47 et 49, et les relie. Le creux 54 en arrière-plan est représenté grâce à trait pointillé. L'écart radial entre le trait mixte 74 et le creux 54 ou la bosse 58, respectivement, met en évidence leurs dimensions radiales, soit la profondeur maximale atteinte par le fond 56, et la hauteur maximale occupée par le sommet 60. Ce dernier peut être joint par une droite 76 passant également par le fond 56, ce qui souligne l'alignement axial de ces extrêmes.

Le présent enseignement peut également être appliqué à une virole externe ou au carter externe par symétrie d'axe A-A.

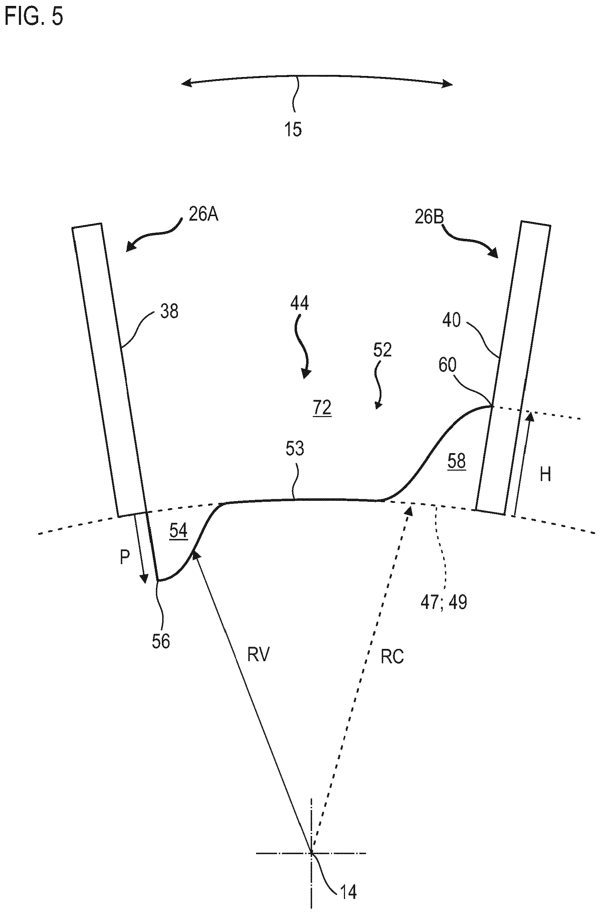

La figure 5 est une coupe de la figure 3 selon l'axe V-V. La coupe est perpendiculaire à l'axe de rotation 14, et traverse le creux 54 et la bosse 58.

Autour de l'axe de rotation 14, la surface de guidage 44 présente un rayon constant RC au contact de l'arc 53 de la zone axisymétrique 52. Ce rayon constant RC peut correspondre à celui de la première zone 47 et/ou à celui de la deuxième zone 49. Au niveau du creux 54 et de la bosse 58, dont le fond 56 et le sommet 60 sont représentés, elle montre un rayon variable RV, dans la zone non-axisymétrique 72.

La surface de guidage 44 est profilée. Elle présente une augmentation de matière radiale par rapport à sa base, notamment générée par les zones (47 ; 49). En un point donné de l'axe de rotation 14 disposé au niveau du creux 54 et de la bosse 58, le rayon RV de la surface de guidage 44 peut fluctuer lorsqu'il parcourt angulairement la surface de jonction 44 suivant la direction circonférentielle 15, notamment en se déplaçant de la première aube 26A à la deuxième aube 26B, soit entre la surface intrados 38 et la surface extrados 40. Bien que seulement deux aubes soient représentées, le présent enseignement peut s'appliquer à toute, ou à plusieurs, ou à chaque rangée annulaire d'aubes compresseur. De même, la surface de guidage peut être reproduite à l'identique entre chaque aube voisine. Cela peut former plusieurs rangées annulaires de bosses identiques et de creux identiques.

En alternative, le support peut être remplacé par des plateformes de fixation des aubes. Chaque aube (26A ; 26B) peut être associée à une plateforme de fixation individuelle. Dans la rangée, les bords latéraux des plateformes s'épousent, et forment chacun une partie de zone axisymétrique.

## Revendications

1. Compresseur (4; 6) de turbomachine axiale (2), notamment un compresseur basse-pression (4) de turbomachine axiale, le compresseur (4 ; 6) comprenant :
- une première aube (26A) avec une surface intrados (38) ;
- une deuxième aube (26B) avec une surface extrados (40) en regard de la surface intrados (38) de la première aube (26A);
- un passage inter-aubes (42) avec une surface de guidage (44) qui relie la surface intrados (38) à la surface extrados (40) et qui présente une bosse principale (58) et un creux principal (54);
la bosse (58) étant de forme convexe, s'étendant circonférentiellement depuis la surface extrados (40) de la deuxième aube (26B), et comprenant un sommet (60) contre la surface extrados et le creux (54) étant de forme concave, s'étendant circonférentiellement depuis la surface intrados (38) de la première aube (26A), et comprenant un fond (56) contre la surface intrados,
**caractérisé en ce que** la surface de guidage (44) comprend une zone axisymétrique (52) ou plane qui traverse axialement le passage inter-aubes (42) de manière à séparer le creux principal (54) de la bosse principale (58).

2. Compresseur (4 ; 6) selon la revendication 1, **caractérisé en ce que** la zone axisymétrique (52) présente une largeur minimale axialement entre le sommet (60) et le fond (56).

3. Compresseur (4 ; 6) selon l'une des revendications 1 à 2, **caractérisé en ce que** la bosse (58) et le creux (54) se chevauchent axialement, éventuellement sur toute la longueur du creux (54).

4. Compresseur (4 ; 6) selon l'une des revendications 1 à 3, **caractérisé en ce que** la longueur de la bosse (58) est supérieure à la longueur du creux (54).

5. Compresseur (4 ; 6) selon l'une des revendications 1 à 4, **caractérisé en ce qu'**entre le creux (54) et la bosse (58), la zone axisymétrique (52) s'étend sur la majorité de la largeur du passage inter-aubes (42).

6. Compresseur (4 ; 6) selon l'une des revendications 1 à 5, **caractérisé en ce que** le creux (54) comporte une profondeur P et la bosse (58) présente une hauteur H, la profondeur P et/ou la hauteur H représentant au moins : 0,50%, ou 2% de la hauteur moyenne des aubes (26 ; 26A ; 26B).

7. Compresseur (4 ; 6) selon l'une des revendications 1 à 6, **caractérisé en ce que** la hauteur maximale de la bosse (58) est supérieure à la profondeur maximale du creux (54).

8. Compresseur (4 ; 6) selon l'une des revendications 1 à 7, **caractérisé en ce que** le passage inter-aubes (42) comprend une moitié aval, et une moitié amont dans laquelle la bosse (58) et le creux (54) sont renfermés.

9. Compresseur (4 ; 6) selon l'une des revendications 1 à 8, **caractérisé en ce que** la surface de guidage (44) comprend une zone amont (47) s'étendant axialement sur au moins 10% des aubes, et séparant axialement les bords d'attaque (34) du creux (54) et de la bosse (58).

10. Compresseur (4 ; 6) selon l'une des revendications 1 à 9, **caractérisé en ce que** la longueur de la bosse (58) est comprise entre : 20% et 80%, ou 30% et 50% ; valeurs comprises ; de la longueur de la deuxième aube (26B).

11. Compresseur (4 ; 6) selon l'une des revendications 1 à 10, **caractérisé en ce que** la longueur du creux (54) est comprise entre : 20% et 50% ; valeurs comprises ; de la longueur de la première aube (26A).

12. Compresseur (4 ; 6) selon l'une des revendications 1 à 11, **caractérisé en ce que** la largeur de la bosse (58) et/ou la largeur du creux (54) est/sont comprises entre : 10% et 50%; valeurs comprises; de la largeur du passage inter-aubes (42).

13. Compresseur (4 ; 6) selon l'une des revendications 1 à 12, **caractérisé en ce que** la surface intrados (38) et la surface extrados (40) comprennent chacune un rayon de raccordement (70) traversant axialement le creux (54) et la bosse (58) respectivement.

14. Aube (26 ; 26A ; 26B) de compresseur (4 ; 6) de turbomachine (2), l'aube comprenant une plateforme de fixation qui comporte une surface de guidage (44) d'un flux de compresseur, et deux bords latéraux destinés à épouser des bords latéraux d'aubes identiques d'une rangée annulaire d'aubes, et une pale s'étendant radialement depuis la surface de guidage, la pale comprenant une surface intrados (38) délimitant un premier passage inter-aubes (42) et une surface extrados (40) délimitant un deuxième passage inter-aubes, la surface de guidage (44) comprenant un creux principal (54) côté intrados, et comprenant un fond (56) contre la surface intrados, et une bosse principale (58) côté extrados et comprenant un sommet (60) contre la surface extrados, **caractérisé en ce que** la surface de guidage comprend une première zone axisymétrique (52) ou sensiblement plane qui traverse axialement le premier passage inter-aubes (42) de manière à séparer le creux principal (54) d'un des deux bords latéraux, et une deuxième zone axisymétrique (52) ou plane qui traverse axialement le deuxième passage inter-aubes de manière à séparer la bosse principale de l'autre des deux bords latéraux.

15. Turbomachine (2), notamment un turboréacteur d'aéronef, comprenant un compresseur (4 ; 6) et/ou au moins une aube (26 ; 26A ; 26B), **caractérisée en ce que** le compresseur est conforme à l'une des revendications 1 à 13 et/ou l'aube est conforme à la revendication 14.

## Patentansprüche

1. Verdichter (4; 6) für eine axiale Turbomaschine (2), insbesondere Niederdruckverdichter (4) für eine axiale Turbomaschine, wobei der Verdichter (4; 6) umfasst:
- eine erste Schaufel (26A) mit einer Vorderseite (38);
- eine zweite Schaufel (26B) mit einer Saugseite (40), die der Vorderseite (38) der ersten Schaufel (26A) gegenüberliegt;
- einen Zwischenschaufeldurchgang (42) mit einer Führungsbahn (44), die die Vorderseite (38) mit der Saugseite (40) verbindet und eine Nabe (58) sowie eine Vertiefung (54) aufweist;
wobei die Nabe konvex ist, und sich in Umlaufrichtung von der Saugfläche (40) des zweiten Flügels (26B) erstreckt und einen Scheitelpunkt (60) gegen die Saugfläche aufweist, und die Vertiefung konkav ist und sich in Umlaufrichtung von der Vorderseite (38) der ersten Schaufel (26A) erstreckt, und einen Boden (56) gegenüber der Saugseite aufweist, **dadurch gekennzeichnet, dass** die Führungsbahn (44) einen achsensymmetrischen oder ebenen Bereich (52) aufweist, der den Zwischenschaufeldurchgang (42) axial durchquert, um die Vertiefung (54) von der Nabe (58) zu trennen.

2. Verdichter (4; 6) gemäß Patentanspruch 1, **dadurch gekennzeichnet, dass** der achsensymmetrische Bereich (52) eine minimale Breite in axialer Richtung zwischen dem Scheitelpunkt (60) und dem Boden (56) aufweist.

3. Verdichter (4; 6) gemäß Patentanspruch 1 oder 2, **dadurch gekennzeichnet, dass** sich die Nabe (58) und die Vertiefung (54) axial überlappen, gegebenenfalls über die gesamte Länge der Vertiefung (54).

4. Verdichter (4; 6) gemäß einem der Patentansprüche 1 bis 3, **dadurch gekennzeichnet, dass** die Länge der Nabe (58) größer ist als die Länge der Vertiefung (54).

5. Verdichter (4; 6) nach einem der Patentansprüche 1 bis 4 **dadurch gekennzeichnet, dass** sich der achsensymmetrische Bereich (52) zwischen der Vertiefung (54) und der Nabe (58) über den größten Teil der Breite des Zwischenschaufeldurchgangs (42) erstreckt.

6. Verdichter (4; 6) gemäß einem der Patentansprüche 1 bis 5, **dadurch gekennzeichnet, dass** die Vertiefung (54) eine Tiefe P und die Nabe (58) eine Höhe H aufweist, wobei die Tiefe P und/oder die Höhe H mindestens 0,50 % oder 2 % der mittleren Höhe der Schaufeln (26; 26A; 26B) beträgt.

7. Verdichter (4; 6) nach einem der Patenansprüche 1 bis 6, **dadurch gekennzeichnet, dass** die maximale Nabenhöhe (58) größer ist als die maximale Vertiefung (54).

8. Verdichter (4; 6) nach einem der Patentansprüche 1 bis 7 **dadurch gekennzeichnet, dass** der Zwischenschaufeldurchgang (42) einen Vorlauf und einen Nachlauf aufweist, in der die Nabe (58) und die Vertiefung (54) untergebracht sind.

9. Verdichter (4; 6) gemäß einem der Patentansprüche 1 bis 8 **dadurch gekennzeichnet, dass** die Führungsbahn (44) einen Vorlauf (47) aufweist, der sich axial über mindestens 10 % der Schaufeln erstreckt und die Vorderkanten (34) axial von der Vertiefung (54) und der Nabe (58) trennt.

10. Verdichter (4; 6) gemäß einem der Patentansprüche 1 bis 9, **dadurch gekennzeichnet, dass** die Länge der Nabe (58) zwischen 20 % und 80 % oder 30 % und 50 % der Länge der zweiten Schaufel (26B) liegt.

11. Verdichter (4; 6) gemäß einem der Patentansprüche 1 bis 10, **dadurch gekennzeichnet, dass** die Länge der Vertiefung (54) zwischen 20 % und 50 % der Länge der ersten Schaufel (26A) liegt.

12. Verdichter (4; 6) gemäß einem der Patentansprüche 1 bis 11, **dadurch gekennzeichnet, dass** die Breite der Nabe (58) und/oder die Breite der Vertiefung (54) zwischen 10 % und 50 % der Breite des Zwischenschaufeldurchgangs (42) beträgt.

13. Verdichter (4; 6) gemäß einem der Patentansprüche 1 bis 12, **dadurch gekennzeichnet, dass** die Saugseite (38) und die Vorderseite (40) jeweils einen Verbindungsradius (70) aufweisen, der axial durch die Vertiefung (54) bzw. die Nabe (58) verläuft.

14. Schaufel (26; 26A; 26B) für einen Verdichter (4; 6) einer Turbomaschine (2), wobei die Schaufel eine Befestigungsplattform aufweist, die eine Führungsbahn (44) für die Kompressorströmung und zwei Seitenkanten zum Verbinden der Seitenkanten identischer Schaufeln eines Schaufelringes besitzt sowie eine Schaufel, die axial von der Führungsbahn verläuft, wobei die Schaufel eine Vorderseite (38) umfasst, die einen ersten Zwischenschaufeldurchgang (42) bildet sowie eine Saugseite (40), die einen zweiten Zwischenschaufeldurchgang begrenzt, wobei die Führungsbahn (44) eine Vertiefung (54) an der Vorderseite umfasst, sowie einen Boden (56) an der Vorderseite, und eine Nabe an der Saugseite, die eine Scheitelpunkt (60) aufweist, **dadurch gekennzeichnet, dass** die Führungsbahn einen ersten achsensymmetrischen oder ebenen Bereich (52) umfasst, der durch den ersten Zwischenschaufeldurchgang (42) verläuft, die Nabe (54) von einer der beiden Seitenkanten trennt, sowie einen zweiten achsensymmetrischen oder ebenen Bereich (52), der axial durch den zweiten Zwischenschaufeldurchgang verläuft, um die Nabe von der anderen der beiden Seitenkanten zu trennen.

15. Turbomaschine (2), insbesondere Flugzeug-Turbotriebwerk, mit einem Verdichter (4; 6) und/oder mindestens einer Schaufel (26; 26A; 26B), **dadurch gekennzeichnet, dass** der Verdichter nach einem der Ansprüche 1 bis 13 und/oder die Schaufel nach Anspruch 14 ausgeführt ist.

## Claims

1. An axial turbomachine (2) compressor (4; 6), especially a low-pressure compressor (4) of an axial turbomachine (2), the compressor (4; 6) comprising:
- a first vane (26A) with an intrados surface (38);
- a second vane (26B) with an extrados surface (40) facing the intrados surface (38) of the first vane (26A);
- an inter-vane passage (42) with a guiding surface (44) which connects the intrados surface (38) to the extrados surface (40) and which has a main bulge (58) and a main recess (54);
the bulge (58) being of convex shape, extending circumferentially from the extrados surface (40) of the second vane (26B), and comprising a vertex (60) against the extrados surface, and the recess (54) being of concave shape, extending circumferentially from the intrados surface (38) of the first vane (26A), and comprising a bottom (56) against the intrados surface,
**characterized in that** the guiding surface (44) comprises an axisymmetric zone (52) or a planar zone which extends axially through the inter-vane passage (42) so as to separate the main recess (54) from the main bulge (58).

2. Compressor (4; 6) according to claim 1, **characterized in that** the axisymmetric zone (52) presents a minimum width axially between the vertex (60) and the bottom (56).

3. Compressor (4; 6) according to any of claims 1 and 2, **characterized in that** the bulge (58) and the recess (54) overlap axially, optionally along the entire length of the recess (54).

4. Compressor (4; 6) according to any one of claims 1 to 3, **characterized in that** the length of the bulge (58) is greater than the length of the recess (54).

5. Compressor (4; 6) according to any one of claims 1 to 4, **characterized in that** between the recess (54) and the bulge (58), the axisymmetric zone (52) extends over the majority of the width of the inter-vane passage (42).

6. Compressor (4; 6) according to any one of claims 1 to 5, **characterized in that** the recess (54) presents a depth P and the bulge (58) presents a height H, the depth P and/or the height H representing at least 0.50%, or 2% of the mean height of the vanes (26; 26A; 26B).

7. Compressor (4; 6) according to any one of claims 1 to 6, **characterized in that** the maximal height of the bulge (58) is greater than the maximal depth of the recess (54).

8. Compressor (4; 6) according to any one of claims 1 to 7, **characterized in that** the inter-vane passage (42) comprises a downstream half, an upstream half in which the bulge (58) and the recess (54) are arranged.

9. Compressor (4; 6) according to any one of claims 1 to 8, **characterized in that** the guiding surface (44) comprises an upstream zone (47) extending axially over at least 10% of the vanes, and axially separating the leading edges (34) of the recess (54) and of the bulge (58).

10. Compressor (4; 6) according to any one of claims 1 to 9, **characterized in that** the length of the bulge (58) is comprised between 20% and 80%, or 30% and 50%, values included, of the length of the second vane (26B).

11. Compressor (4; 6) according to any one of claims 1 to 10, **characterized in that** the length of the recess (54) is comprised between 20% and 50%, values included, of the length of the first vane (26A).

12. Compressor (4; 6) according to any one of claims 1 to 11, **characterized in that** the width of the bulge (58) and/or the width of the recess (54) is/are comprised between 10% and 50%, values included, of the width of the inter-vane passage (42).

13. Compressor (4; 6) according to any one of claims 1 to 12, **characterized in that** the intrados surface (38) and the extrados surface (40) each comprise a connecting radius (70) axially extending through the recess (54) and the bulge (58) respectively.

14. Turbomachine (2) compressor (4; 6) vane (26; 26A; 26B), the vane comprising a fixing platform which comprises a guiding surface (44) of a compressor flow, and two lateral edges designed to match the identical vane side edges of an annular row of vanes, and a vane extending radially from the guiding surface, the vane comprising an intrados surface (38) delimiting a first inter-vane passage (42) and an extrados surface (40) delimiting a second inter-vane passage, the guiding surface (44) comprising a main recess (54) on the intrados side, and comprising a bottom (56) against the intrados surface, and a main bulge (58) on the extrados side (40) and comprising a vertex (60) against the extrados surface, **characterized in that** the guiding surface comprises a first axisymmetric zone (52) or a substantially planar zone which passes axially through the first inter-vane passage (42) so as to separate the main recess (54) from one of the two lateral edges, and a second axisymmetric zone (52) or a planar zone which passes axially through the second inter-vane passage so as to separate the main bulge from the other of the two side edges.

15. Turbomachine (2), especially an aircraft turbojet engine, comprising a compressor (4; 6) and/or at least one vane (26; 26A; 26B), **characterized in that** the compressor is in accordance with one of claims 1 to 13 and/or the vane is in accordance with claim 14.
